**Europäisches Patentamt**

**European Patent Office**

**Office européen des brevets**

(19)

(11) **EP 0 689 361 B1**

(12) **FASCICULE DE BREVET EUROPEEN**

(45) Date de publication et mention
de la délivrance du brevet:
**05.07.2000 Bulletin 2000/27**

(51) Int Cl.⁷: **H04N 7/50**

(21) Numéro de dépôt: **95401467.6**

(22) Date de dépôt: **21.06.1995**

(54) **Procédé de quantification de coéfficients dans un codeur d'images vidéo numérique**

Verfahren zur Quantisierung von Koeffizienten in einem digitalen Bildkodierer

Method for the quantization of the coefficients in a digital video coder

(84) Etats contractants désignés:
**DE FR GB IT**

(30) Priorité: **22.06.1994 FR 9407676**

(43) Date de publication de la demande:
**27.12.1995 Bulletin 1995/52**

(73) Titulaire: **THOMSON multimedia**
**92648 Boulogne Cédex (FR)**

(72) Inventeurs:
 • **Kerdranvat, Michel**
 **F-92050 Paris la Defense (FR)**
 • **Crocitti, Valérie**
 **F-92050 Paris la Defense (FR)**

(74) Mandataire: **Ruellan-Lemonnier, Brigitte et al**
 **THOMSON multimedia,**
 **46 quai A. Le Gallo**
 **92648 Boulogne Cédex (FR)**

(56) Documents cités:
 **EP-A- 0 444 660    EP-A- 0 466 366**
 **EP-A- 0 478 230    EP-A- 0 514 663**
 **EP-A- 0 540 961    US-A- 5 283 646**

## Description

La présente invention concerne un procédé de quantification de coefficients dans un système de compression d'images et plus particulièrement la régulation du buffer de sortie par la quantification de coefficients de transformation. L'invention s'applique dans le domaine de la transmission de données et notamment à la transmission d'images compressées à bas débit dans les applications de visiophonie, voir e.g. EP-A-0 540 961.

L'invention a pour objet un procédé de quantification de coefficients dans un système de compression d'images caractérisé en ce que

chaque image étant divisée en groupes de blocs,
on détermine un quantificateur en début d'image courante, ledit quantificateur étant corrigé par un coefficient, fonction de la différence entre d'une part le nombre de bits produits par le codage des groupes de blocs de l'image courante précédemment codés et d'autre part une estimation de ce nombre de bits,
ladite estimation étant fonction de la répartition des bits parmi les blocs dans au moins une image précédemment codée.

Ainsi, on tient compte de la répartition de l'information dans les images précédentes pour coder l'image courante. En effet, il apparaît que généralement, l'information n'est pas distribuée de façon uniforme dans une image.

Selon un mode de réalisation particulier, ledit coefficient est recalculé avant la quantification d'au moins un desdits groupes de blocs.

Selon un mode de réalisation particulier, ledit procédé est mis en jeu au moins lorsque l'image courante est codée en mode inter.

Selon un mode de réalisation particulier, ledit quantificateur est appliqué à des coefficients fréquentiels déterminés à partir des pixels de chaque bloc.

Selon un mode de réalisation particulier, l'image étant divisée en lignes de macroblocs, le calcul du coefficient correcteur est effectué en début de chaque ligne de macroblocs.

Selon un mode de réalisation particulier, ladite estimation (bitprev[mb]) est obtenue par l'égalité:

$$\text{bitprev[mb]} = a * \text{bitp[mb]}_0 + b * \text{bitp[mb]}_{i-1}$$

où a et b sont des coefficients de pondération, $\text{bitp[mb]}_0$ est une fonction donnant, pour la dernière image codée en mode intra, le rapport entre le nombre de bits utilisés jusqu'au macrobloc mb et le nombre total de bits utilisés, $\text{bitp[mb]}_{i-1}$ représentant une fonction similaire pour la dernière image codée.

On tient donc compte de la dernière image codée en mode intra, celle-ci subissant moins (ou pas du tout) de correction au niveau du quantificateur. Le nombre de bits nécessaires pour coder différentes zones ou blocs de cette image intra donne donc une bonne idée de la répartition de l'information dans l'image.

Selon un mode de réalisation particulier, le coefficient de correction est tel que:

$$c2 = c * (\text{Bi\_mb} - \text{bitprev[mb]}*\text{Bprod}_i)/R$$

où $\text{Bprod}_i$ est le nombre cible de bits à utiliser pour le codage de l'image courante, R étant le débit en sortie du buffer, c étant un coefficient.

Selon un mode de réalisation particulier, Bmoy étant une valeur moyenne du nombre de bits nécessaires pour coder une image, Bprodi étant le nombre cible de bits à utiliser pour le codage de l'image courante, le quantificateur choisi en début d'image est:

- le quantificateur moyen de l'image précédente si $\alpha\text{Bmoy}<\text{Bprodi}<\beta\text{Bmoy}$ (avec $\alpha,\beta$ positifs et $\alpha<\beta$),

le quantificateur moyen de la dernière image répondant au critère $\text{Bprod}\leq\alpha\text{Bmoy}$, respectivement $\beta\text{Bmoy}\leq\text{Bprod}$ si pour l'image courante, la même condition est remplie avec Bprodi.

Selon un mode de réalisation particulier, le nombre cible de bits alloués pour le codage d'une image est fonction de l'état de remplissage d'un buffer de sortie au début du codage.

Selon un mode de réalisation particulier, on prévoit une valeur minimale pour le quantificateur, de façon à ce que si la somme du quantificateur choisi en début d'image et du coefficient de correction est inférieure à cette valeur minimale, le quantificateur effectivement utilisé prenne cette valeur minimale.

Selon un mode de réalisation particulier, on prévoit une valeur maximale pour le quantificateur de façon à ce que si la somme du quantificateur choisi en début d'image et du coefficient correcteur est supérieure à cette valeur maximale, le quantificateur effectivement utilisé prenne cette valeur maximale.

Selon un mode de réalisation particulier, la valeur minimale, respectivement maximale, du quantificateur est fixée en début d'image, en fonction du nombre cible de bits à utiliser pour le codage de l'image courante, par rapport au nombre moyen de bits utilisés pour le codage d'une image.

Selon un mode de réalisation particulier, l'image étant divisée en macroblocs, les valeurs minimale et/ou maximale sont ajustées après chaque calcul du coefficient de correction en tenant compte de l'évolution de ce coefficient sur au moins la ligne précédente de macroblocs.

Selon un mode de réalisation particulier, l'image étant divisée en macroblocs, un nouveau calcul du coefficient de correction est effectué pour chacun des macroblocs de la dernière ligne de macroblocs.

D'autres avantages et caractéristiques de l'invention apparaîtront à travers la description d'un exemple de réalisation particulier non limitatif, illustré par les figures jointes parmie lesquelles:

- la figure 1 représente un schéma de fonctionnement général d'un dispositif de compression,
- la figure 2 représente la distribution de l'information dans une image test par rapport à une image à distribution uniforme,
- la figure 3 représente sous la forme d'un diagramme le choix du nombre de bits alloués à une image inter par rapport à l'état de remplissage du buffer,
- la figure 4 est un organigramme explicitant les corrections apportées à la valeur minimale qmin autorisée pour le quantificateur,

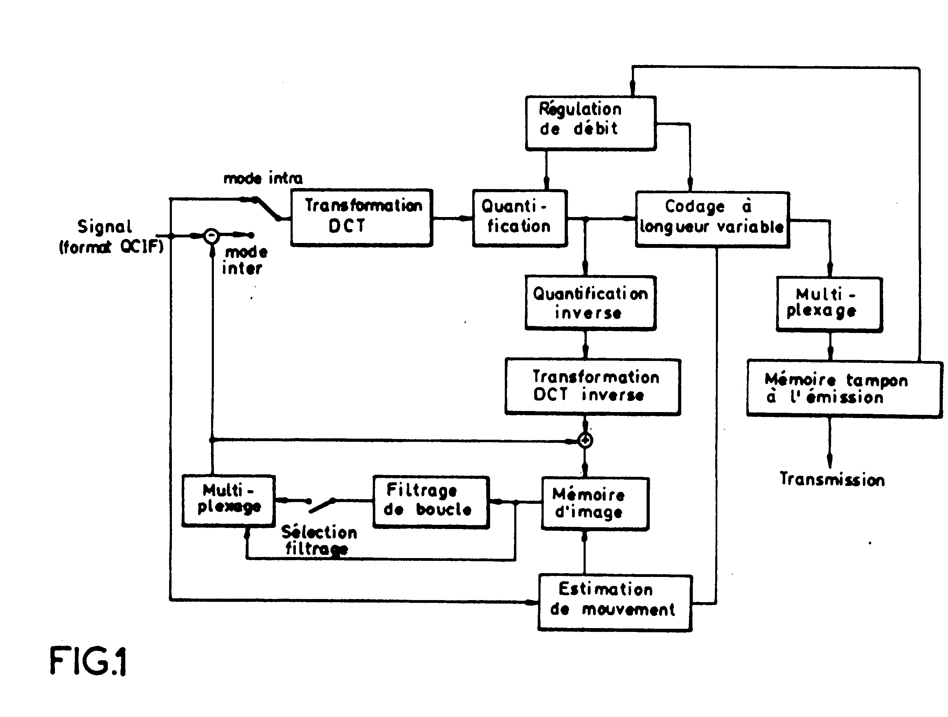

La figure 1 représente schématiquement le fonctionnement d'un dispositif de compression hybride à prédiction, transformation, et estimation de mouvement.

Selon le présent exemple, les images à traîter sont au format QCIF ("Quarter Common Intermediate Format"), dont la résolution est de 176*144 pixels en luminance Y et de 88*72 pixels pour chacune des composantes couleur dR et dB. Chaque image comporte donc 99 macroblocs pour la luminance. Ces macroblocs de 16*16 pixels sont organisés en 9 lignes de 11 macroblocs.

Le format QCIF est décrit plus en détail dans la norme CCITT H261.

Dans ce qui suit, pour simplifier les explications, seulement le codage de la luminance sera évoqué.

Selon le présent exemple, les images peuvent être codées en deux modes: le mode intra ou le mode inter. Une image codée selon le mode intra peut être décodée sans référence à une autre image de la séquence d'images. Une image codée en inter fait référence à une image de référence, stockée dans une mémoire d'image. Cette image de référence correspond à celle décodée par le décodeur.

Nous allons tout d'abord décrire le codage d'une image en mode intra. L'image est divisée en blocs de 8*8 pixels, qui subissent une transformation orthogonale cosinus discrète vers le domaine fréquentiel. Les coefficients de transformée ainsi obtenus sont quantifiés, codés selon un codage à longueur variable et multiplexés avec des données système pour être stockés dans une mémoire tampon en attendant leur transmission à débit fixe.

Parallèlement, l'encodeur décode les blocs qu'il vient de coder pour estimer l'erreur faite lors du codage. Les coefficients quantifiés sont déquantifiés, subissant ensuite une transformation cosinus discrète inverse. L'image obtenue est alors stockée dans la mémoire d'image de référence.

Le codage d'une image en mode inter est plus complexe. En plus du processus décrit ci-dessus, l'image subit d'une part une différentiation par rapport à l'image de référence et d'autre part une estimation de mouvement. Pour chaque macrobloc de l'image courante, on détermine un vecteur mouvement par rapport à un macrobloc de l'image de référence. Le macrobloc de l'image de référence est le macrobloc qui est considéré comme contenant l'information la plus proche de celle contenue dans le macrobloc courant. Ce vecteur, une fois codé par un codage à longueur variable, est multiplexé avec le macrobloc et stocké dans la mémoire tampon.

Un fois le vecteur mouvement déterminé, on effectue la différence entre le macrobloc courant et celui de l'image de référence correspondant au vecteur mouvement. Les quatre blocs de différences de pixels résultants sont alors soumis comme précédemment à la transformation cosinus et à la quantification, la déquantification et la transformée cosinus inverse, avant d'être réintroduits dans l'image de référence.

Les blocs et macroblocs issus de la mémoire de référence sont éventuellement filtrés avant leur soustraction à l'image courante.

Le choix du mode de compression (inter ou intra) pourra également se faire au niveau de chaque macrobloc.

Enfin, un bloc n'est pas nécessairement codé. S'il présente une très faible différence par rapport au bloc correspondant de l'image de référence, aucun coefficient de transformation ne sera transmis. On indiquera toutefois dans l'en-tête du macrobloc correspondant que les coefficients pour ce bloc ne sont pas transmis.

La quantité d'information finalement obtenue pour chaque macrobloc lors du stockage dans la mémoire tampon dépend de nombreux facteurs: le mode de compression, la nature simple ou complexe de l'image, le type de codage à longueur variable, le type d'estimation de mouvement, la quantification... Le débit de données vers la mémoire tampon (aussi nommé "buffer") est donc par nature variable. Or, la ligne de transmission a un débit maximal nécessairement fini et la plupart du temps fixe. Il peut donc arriver que le buffer déborde lorsque la ligne de transmission ne peut écouler toutes les informations stockées de manière assez rapide, ou que le buffer se vide plus vite qu'il ne se remplit.

Le débit de transmission à partir du buffer n'étant généralement pas adaptable, on agira sur le débit de données vers le buffer pour éviter le débordement ("overflow") ou l'assèchement ("underflow"). Les facteurs de régulation habituellement utilisés sont le pas de quantification et le codage à longueur variable. Ce dernier cas ne sera pas explicité de manière plus précise. Dans le cadre de l'invention, nous nous interessons principalement à l'adaptation du pas de quantification.

Lorsque le buffer est plein, le codage doit s'arrêter (quitte à ne pas coder certaines images), le temps que le buffer se vide assez pour que de nouvelles données puissent y être introduites.

Lorsque le buffer est vide, on transmet des bits de bourrage.

Comme mentionné précédemment, un bloc de pixels de 8*8 subit une transformation DCT, ce qui permet d'obtenir un bloc de coefficients de même dimensions. Le coefficient situé en haut à gauche de ce bloc est le coefficient de composante continue. Plus un coefficient est éloigné de ce bloc, plus la fréquence correspondante est haute.

Les coefficients DCT obtenus sont situés dans la fourchette [-2048; + 2047].

Le coefficient DCT ("Discrete cosine transform" ou transformée cosinus discrète) représentant la composante continue du bloc transformé est généralement quantifié avec un pas de quantification fixe assez faible: en effet les variations de la composante continue sont très visibles à l'écran en participant largement à "l'effet bloc" qui est particulièrement visible sur des dégradés de luminance. D'autre part, on code généralement la différence du coefficient de composante continue par rapport au coefficient précédemment obtenu. Pour les autres 63 coefficients de chaque bloc de 8*8 pixels, on prévoit un pas de quantification "q" qui peut changer de macrobloc en macrobloc. (Selon une variante de réalisation, le pas de quantification q peut changer pour chaque bloc. Il est également envisageable de définir des matrices de quantification différentes et d'en choisir une plutôt qu'une autre selon des critères donnés).

Le traîtement spécial réservé au coefficient de composante continue n'est effectué que pour des images codées en mode intra. Lorsqu'une image est codée en mode inter, le macrobloc entier est quantifié à l'aide d'un seul pas de quantification.

Selon le présent exemple de réalisation, le pas de quantification q est un entier compris entre 1 et 31. La quantification consiste à diviser chaque coefficient par 2 fois q. Par exemple, si q est égal à 31, tout coefficient sera quantifié avec un pas de 64. Un coefficient compris entre [-2048;+2047] sera comprimé sur une echelle [-32;+31]. Il apparaît donc que le nombre de bits produits est fonction inverse du pas de quantification. Il est à remarquer qu'il n'y a pas à priori de relation linéaire entre le nombre de bits finalement écrits dans le buffer et le quantificateur, étant donné que les coefficients quantifiés subissent d'autres traîtements de compression et que des données supplémentaires sont rajoutées (vecteurs mouvement, informations diverses). Cependant, la variation du nombre de bits produits en fonction du quantificateur est globalement verifiée.

Dans la suite, les variables suivantes seront utilisées:

- q       Quantificateur
- qmoy       Quantificateur moyen de l'image précédente

- c2       Correction apportée pour l'obtention de q pour la ligne courante
- pc2       Correction utilisée pour la ligne de macroblocs précédente
- ppc2       Correction utilisée pour la ligne de macroblocs avant la ligne précédente
- qmoy1       Valeur moyenne de q sur une image précédemment codée et répondant à certains critères
- qmoy2       Similaire à qmoy1
- qmin       Valeur minimale de q (> = 1)
- qmax       Valeur maximale de q (< = 31)
- Bi_mb       Nombre de bits déjà produits pour tous les macroblocs de l'image courante situés avant le macrobloc courant
- mb       Numéro du macrobloc courant (compris entre 1 et 99)
- Bprod       Nombre cible de bits à produire pour l'image courante
- Bmoy       Nombre moyen de bits à produire par image
- Bmax       Valeur maximale de Bprod (prise égale à 2*Bmoy)
- Bsize       Taille du buffer
- R       Débit en sortie du buffer
- bitp[mb]       Pourcentage de Bprod utilisé jusqu'au macrobloc courant
- NQ       Nombre total de quantificateurs (31 dans le cas présent)
- Buffer_status Degré de remplissage du buffer

Les indices indiquent le numéro d'une image. L'indice O indique la première image codée.

Les valeurs numériques données sont celles correspondant au présent exemple de réalisation.

Au départ, le buffer est vide et buffer_status=0.

La première image à coder est codée en mode intra, la mémoire de référence étant vide ou contenant des données non corrélées avec la première image. On fixe le pas de quantification qO pour toute cette image. Plus ce coefficient est faible, meilleure sera la qualité de l'image de départ, mais plus le nombre de bits nécessaires pour coder cette image sera important. Ceci aura une influence sur le nombre de bits disponibles pour le codage des images suivantes. Selon le présent exemple, on prend q0=25.

L'image est ensuite codée. Ce codage permet de déterminer la répartition de l'information dans la scène considérée, en calculant pour chaque macrobloc (ou chaque ligne de macroblocs) le rapport entre le nombre de bits produits pour ce bloc ou cette ligne et le nombre total de bits produits pour l'image entière.

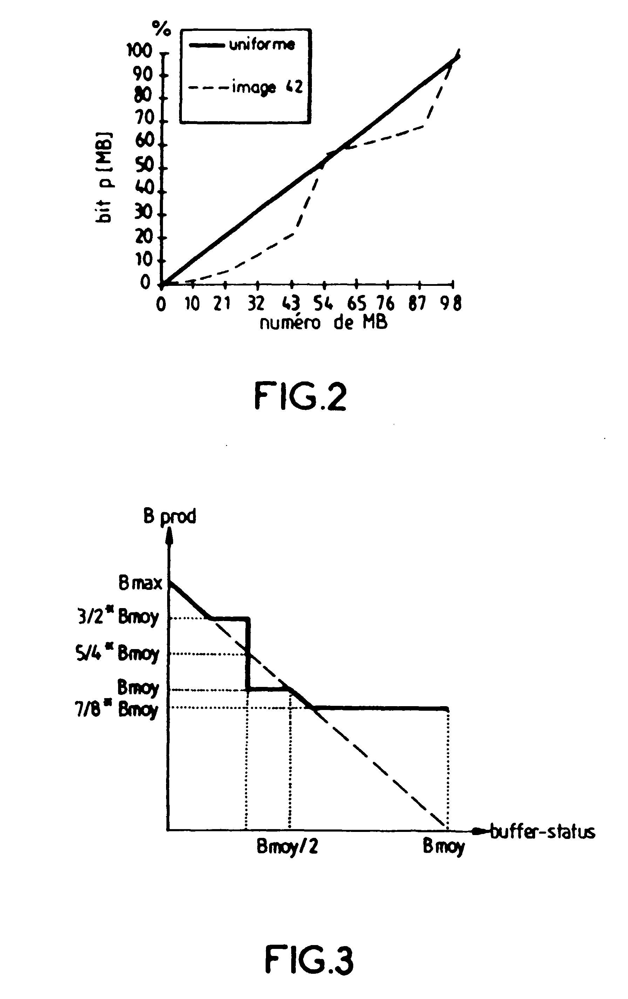

La figure 2 représente cette répartition pour une image test (courbe en pointillé pour l'image "42"), par rapport à une image à distribution uniforme (bisectrice). Plus la pente d'une courbe est grande pour une ligne de macroblocs, plus la quantité de bits produits par les macroblocs de cette ligne est grande (fonction d'accumulation).

On remarquera que dans le cas général, l'information a tendance à être plus dense au centre de l'image, ce qui conduit à des pentes plus raides pour les lignes centrales de macroblocs.

L'information de répartition ainsi déterminée est mémorisée sous la forme d'une table, sous la forme d'un cumul des pourcentages jusqu'à un macrobloc (ou une ligne de macroblocs) donné. Ce cumul est dénommé bitp[mb], où mb est le numéro du macrobloc courant. bitp[mb] donne le pourcentage du nombre total de bits dédiés à une image qui ont déjà été nécessaires pour coder les macroblocs qui précèdent le macrobloc courant. Cette information va être utilisée pour déterminer les corrections à apporter au quantificateur pour les images suivantes, en fournissant une prévision du nombre de bits nécessaires pour une ligne donnée de macroblocs.

En conséquence:

bitp[mb]= (somme (de i = 1 à mb-1) des bits ayant été nécessaires pour coder le macrobloc i)/nombre total de bits pour coder l'image.

Si i est l'image courante, alors les valeurs de la fonction de prévision bitprev[mb] utilisée pour les calculs concernant cette image i seront déterminés par une formule du type:

$$bitprev[mb] = a* bitp[mb]_0 + b* bitp[mb]_{i-1}$$

On tient donc compte de la dernière image codée en mode intra (image O) et de la dernière image codée (image i-1 précédant l'image courante i).

Les coefficients de pondération a et b servent à équilibrer les variations des valeurs de bitp[mb] de l'image précédente en permettant une référence à la dernière image codée en intra. Une valeur élevée de a par rapport à b limitera d'autant l'influence de ces variations.

Des valeurs de 4/5 et de 1/5 respectivement pour a et b ont donné de bons résultats.

Lorsqu'une image i a été codée, on mémorise bien entendu les valeurs réellement obtenues pour la fonction bitp[mb]$_i$ correspondante.

Après le codage de la première image, le buffer n'est plus vide. L'état du buffer servira à déterminer le nombre de bits Bprod alloués théoriquement au codage de l'image suivante. Il s'agit par la suite de se rapprocher de ce nombre cible.

On suppose que l'on connait le nombre moyen de bits nécessaires pour coder une image. Ce nombre moyen est appelé Bmoy. Il dépend du débit en sortie du buffer ainsi que de la fréquence des images à coder.

Le choix de Bprod est déterminé par l'égalité suivante:

$$Bprod = Bmax*(1 - buffer\_status/Bsize)$$

où Bmax est le nombre maximal de bits alloués à une image (même si éventuellement ce nombre peut être dépassé en pratique), et où Bsize est la taille du buffer en bits. Dans le présent exemple, Bsize = Bmoy. La figure 3 montre un diagramme où la fonction ci-dessus est tracée en pointillé. La courbe en gras donne la fonction réellement utilisée, cette fonction comportant un certain nombre de limitations. Néanmoins, la fonction Bprod = f(Buffer\_status) est une fonction généralement décroissante, ce qui indique que lorsque le buffer se remplit, le nombre de bits alloués pour une image diminue. Néanmoins, on prévoit un palier minimum pour le nombre de bits alloués à une image. Selon le présent exemple de réalisation, ce palier est proche de Bmoy, tout en étant inférieur à Bmoy.

Le quantificateur de la première ligne de macroblocs d'une image inter est choisi de la façon suivante:

Si Bprod≤αBmoy alors q = qmoy1
Si αBmoy<Bprod<βBmoy alors q = qmoy
Si Bprod≥βBmoy alors q = qmoy2

Selon le présent exemple de réalisation, des valeurs de α et β respectives de 1 et de 1.5 ont donné de bons résultats.

qmoy est le quantificateur moyen de l'image précédente.

qmoy1 représente le quantificateur moyen de la dernière image pour laquelle on avait Bprod≤αBmoy.

qmoy2 représente le quantificateur moyen de la dernière image pour laquelle on avait Bprod≥βBmoy.

Ainsi, on obtient un quantificateur qui prend en compte les quantificateurs des images précédentes.

Selon une variante, on prévoit des valeurs par défaut de qmoy1 et qmoy2 lorsqu'aucune moyenne n'a pu être déterminée lors d'images précédentes.

De temps en temps, il est nécessaire de forcer le codage en mode intra pour éliminer une accumulation de défauts dans les mémoires de référence de l'encodeur et du décodeur, ou lorsqu'un changement de scène se produit et qu'un codage inter n'est plus viable. Dans ce cas, le processus est repris au début.

On détermine ensuite un coefficient correcteur du quantificateur qui sera ajouté à ce quantificateur. Ce coefficient correcteur est appelé c2 dans ce qui suit.

$$c2= c * (Bi\_mb - bitprev[mb]*Bprod)/R$$

où Bi\_mb est le nombre de bits réellement produits pour l'image actuelle pour les macroblocs situés avant le macrobloc courant. On voit que le terme entre parenthèses correspond à la différence entre le nombre de bits réellement produits et le nombre de bits prévus par la fonction de répartition bitprev[mb] (en tenant compte de Bprod). c2 peut être positif ou négatif, selon que l'on dépasse ou non le nombre de bits prévus. Si le nombre de bits utilisés avant le codage du macrobloc mb est supérieur au nombre de bits prévus, alors c2 sera positif. Le quantificateur sera augmenté d'autant, et on réduira le nombre de bits résultant de la ligne courante de macroblocs.

c est un coefficient qui dépend du débit R et des variations possibles entre le nombre de bits produits et le nombre de bits prévus. Plus c est choisi grand, plus les variations introduites par c2 seront rapides, c2 est de l'ordre de grandeur de q en valeur absolue.

A titre d'exemple, pour un débit R de 20000 bit/s et une erreur de prévision de quelques centaines de bits, on choisira c de l'ordre de 100 à 1000.

Selon le présent exemple, le quantificateur est rafraîchi au début de chaque ligne de macrobloc (en dehors de la première ligne). On calcule donc un coefficient de correction c2 en début de ligne. Ceci évite un changement de la qualité de l'image dans une bande horizontale de l'image. Bien entendu, il est possible d'effectuer le calcul de c2, et donc le rafraîchissement de q à tous les macroblocs.

Selon une variante préférentielle de l'exemple de réalisation, on effectue un rafraîchissement de q en début de chaque ligne de macroblocs, sauf pour la dernière ligne, pour laquelle le rafraîchissement est effectué macrobloc par macrobloc. Ceci permet de corriger davantage les éventuelles variations du nombre de bits effectivement utilisés par rapport à Bprod de façon plus conséquente dans une ligne de macroblocs non située au centre de l'image.

Si l'on ne dispose des valeurs de bitprev[mb] seulement pour le début de chaque ligne de macroblocs, on effectue une interpolation linéaire de la dernière valeur (début de la dernière ligne) jusqu'au pourcentage 100%.

Selon une variante de l'exemple de réalisation, c2 est pondéré de la façon suivante:

si qmoy> 20 alors c = 600
sinon, c=300

Ainsi, l'effet de c2 est augmenté lorsque le quantificateur est élevé.

On pose q = qmoy + c2

qmoy garde la valeur choisie en début d'image pour toute l'image (qmoy, qmoy1 ou qmoy2).

Selon une variante de l'exemple de réalisation, on effectue une correction supplémentaire sur les limites imposées à q. On détermine des valeurs minimale et maximale, respectivement qmin et qmax. Lorsque q devient inférieur à qmin, alors on pose q égal à qmin. De même, lorsque q est supérieur à qmax, alors q est pris égal à qmax.

En début d'image, on fixe des valeurs de départ de qmin et qmax. Ces valeurs peuvent être uniques (par exemple qmin=8 et qmax=23), ou selon une variante préférentielle résulter d'une comparaison entre Bprod et Bmoy.

Si Bprod est inférieur à Bmoy, cela veut dire que l'image courante devra être codée avec relativement peu de bits. En conséquence, on augmente la valeur de qmin (par exemple qmin = 11 au lieu de 8) pour éviter des pas de quantification trop petits qui conduiraient à un flux de bits trop important vers le buffer.

Dans le cas contraire, et notamment si Bprod dépasse assez largement Bmoy, on choisira un qmin plus faible (par exemple 6 au lieu de 8).

Une détermination similaire est faite pour qmax.

La valeur de qmin est revue lors du codage de l'image. Si le nombre de bits résultant à un moment donné du codage d'un certain nombre de macroblocs est en dessous de ce que l'on attend, qmin est abaissé. Inversement, lorsqu'on dépasse les estimations, qmin est augmenté. Cependant, c2 peut prendre des valeurs importantes, qui introduisent des variations très brusques. On cherche à atténuer ces variations.

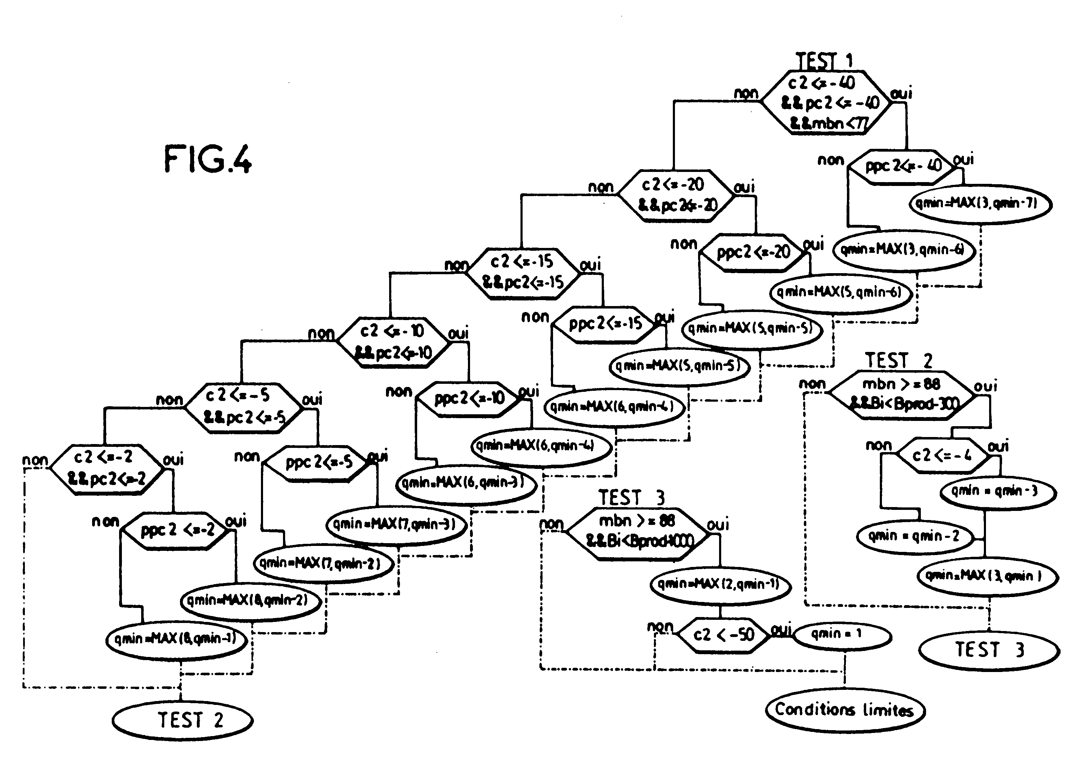

La figure 4 illustre les corrections apportées à qmin en début de ligne sous la forme de trois tests successifs. On nomme pc2 la valeur de c2 de la ligne précédente et ppc2 la valeur de c2 de la ligne avant la ligne précédente. On rappelle que plus la valeur de c2 est négative, plus il y a de sous-production de bits par rapport à la valeur de Bprod fixée en début d'image.

On pose:

si pc2≤(c2 + 2), alors qmin = max(qmin-1,pq-1) pq étant le quantificateur utilisé pour la ligne précédente, qmin ayant la valeur fixée en fonction de Bprod et Bmoy.

Le test 1, destiné à abaisser qmin en cas de sous-production de bits (c2<0), est conçu de façon à tenir compte de c2, de pc2 et de ppc2, c'est à dire de l'évolution des coefficients de correction sur plusieurs lignes.

On définit une suite de valeurs négatives possibles pour c2, pc2 et ppc2. Dans le cas de l'exemple, ces valeurs se situent entre -40 et -2: -2, -5, -10, -15, -20, -40. Les coefficients peuvent être inférieurs à -40.

En commençant par la valeur la plus basse, on détermine si c2 et pc2 sont inférieurs à cette valeur. Si cela est le cas, alors on détermine si ppc2 est également inférieur à cette valeur. Ceci indique si les corrections apportées ont été au moins de même valeur pendant deux ou trois lignes. Plus la valeur test est basse, plus qmin sera abaissée. Toutefois, si qmin était très élevé, on tient compte de ce fait en posant que qmin = max (x, qmin-y), où x est la valeur de qmin associée à la valeur test et où y est un entier qui augmente lorsque la valeur test devient plus négative.

Si ppc2 ne répond pas au critère précédent, qmin n'est pas abaissée de la même manière, la tendance de baisse n'étant pas la même sur les trois dernières lignes de macroblocs.

Une fois ce test 1 réalisé, qmin est au minimum égal à 3.

Les tests 2 et 3 sont appliqués uniquement pour la dernière ligne de macroblocs, dans le cas où une correction robuste est nécessaire pour corriger les écarts par rapport aux prévisions et dans ce cas précis, une sous production de bits. En effet, les corrections réalisées par le premier test ne permettent pas d'atteindre les valeurs les plus basses du quantificateur.

Le test 2 entre en jeu si l'on est à 10% en dessous des prévisions en début de dernière ligne, tandis que le test 3 entre en jeu quand on est à environ 25% en dessus des prévisions.

C'est seulement dans le cas du test 3 que la valeur qmin = 1 est atteinte.

Les "conditions limites" prévues après les trois tests ont pour but de forcer l'utilisation du quantificateur maximal (31) dans le cas où le nombre de bits produits est très proche du nombre de bits total alloué Bprod. Cette situation se produit en fin d'image. Le test évite alors un débordement de faible valeur par rapport à Bprod. Le test de "condition limite" peut également être effectué à un autre moment qu'après les tests 1 à 3.

Selon une variante de l'exemple de réalisations, Qmax subit également une correction. Plus le quantificateur est élevé, plus l'image une fois décodée sera dégradée. Il est donc important de n'utiliser qu'à bon escient les valeurs élevées de quantification.

Selon une autre variante de l'exemple de réalisation, on réalise un correction supplémentaire sur le quantificateur. Cette correction tient compte, pour le quantificateur de la ligne courante, du pourcentage de bits qui est prévu pour la ligne courante. Précédemment, les corrections étudiées tenaient compte uniquement des lignes précédemment codées.

Il est bien évident que les valeurs numériques données ne le sont qu'à titre d'exemple et qu'elles ne limitent pas l'invention.

Selon l'exemple de réalisation donné, les images peuvent être codées en mode inter ou intra. Il est bien entendu que l'invention ne se limite pas à un tel système et peut facilement être adaptée à des systèmes mettant en oeuvre aussi un mode de codage bidirectionnel.

## Revendications

**1.** Procédé de quantification de coefficients dans un système de compression d'images caractérisé en ce que

chaque image étant divisée en groupes de blocs,
on détermine un quantificateur (qmoy, qmoy1, qmoy2) en début d'image courante, ledit quantificateur étant corrigé par un coefficient (c2), fonction de la différence entre d'une part le nombre de bits produits pour les groupes de blocs de l'image courante précédemment codés (Bi_mb) et d'autre part une estimation de ce nombre de bits,
ladite estimation étant fonction de la répartition des bits parmi les blocs dans au moins une image précédemment codée (bitprev[mb]).

**2.** Procédé selon la revendication 1, caractérisé en ce que ledit coefficient (c2) est recalculé avant la quantification d'au moins un desdits groupes de blocs.

**3.** Procédé selon l'une des revendications 1 ou 2, caractérisé en ce qu'il est mis en jeu au moins lorsque l'image courante est codée en mode inter.

**4.** Procédé selon l'une des revendications 1 à 3, caractérisé en ce que ledit quantificateur est appliqué à des coefficients fréquentiels déterminés à partir des pixels de chaque bloc.

**5.** Procédé selon l'une des revendications 1 à 4, caractérisé en ce que, l'image étant divisée en lignes de macroblocs, le calcul du coefficient correcteur (c2) est effectué en début de chaque ligne de macroblocs.

**6.** Procédé selon l'une des revendications 1 à 5, caractérisé en ce que ladite estimation (bitprev[mb]) est obtenue par l'égalité:

$$\text{bitprev[mb]} = a * \text{bitp[mb]}_0 + b * \text{bitp[mb]}_{i-1}$$

où a et b sont des coefficients de pondération, $\text{bitp[mb]}_0$ est une fonction donnant, pour la dernière image codée en mode intra, le rapport entre le nombre de bits utilisés jusqu'au macrobloc mb et le nombre total de bits utilisés, $\text{bitp[mb]}_{i-1}$ représentant une fonction similaire pour la dernière image codée.

**7.** Procédé selon la revendication précédente, caractérisé en ce que le coefficient de correction (c2) est tel que:

$$c2 = c * (\text{Bi\_mb} - \text{bitprev[mb]}*\text{Bprod}_i)/R$$

où $\text{Bprod}_i$ est le nombre cible de bits à utiliser pour le codage de l'image courante, R étant le débit en sortie du buffer, c étant un coefficient.

**8.** Procédé selon l'une des revendications précédentes, caractérisé en ce que Bmoy étant une valeur moyenne du nombre de bits nécessaires pour coder une image, Bprodi étant le nombre cible de bits à utiliser pour le codage de l'image courante, le quantificateur (q) choisi en début d'image est:

- le quantificateur moyen (qmoy) de l'image précédente si $\alpha Bmoy < Bprodi < \beta Bmoy$ (avec $\alpha, \beta$ positifs et $\alpha < \beta$),

le quantificateur moyen (qmoy1, qmoy2) de la dernière image répondant au critère $Bprod \leq \alpha Bmoy$, respectivement $\beta Bmoy \leq Bprod$ si pour l'image courante, la même condition est remplie avec Bprodi.

9. Procédé selon l'une des revendications 7 ou 8, caractérisé en ce que le nombre cible de bits alloués pour le codage d'une image (Bprod) est fonction de l'état de remplissage (buffer_status) d'un buffer de sortie au début du codage.

10. Procédé selon l'une des revendications précédentes, caractérisé en ce que l'on prévoit une valeur minimale (qmin) pour le quantificateur (q), de façon à ce que si la somme du quantificateur choisi en début d'image (qmoy, qmoy1, qmoy2) et du coefficient de correction (c2) est inférieure à cette valeur minimale, le quantificateur effectivement utilisé (q) prenne cette valeur minimale.

11. Procédé selon l'une des revendications précédentes, caractérisé en ce que l'on prévoit une valeur maximale (qmax) pour le quantificateur (q) de façon à ce que si la somme du quantificateur choisi en début d'image (qmoy, qmoy1, qmoy2) et du coefficient correcteur (c2) est supérieure à cette valeur maximale (qmax), le quantificateur effectivement utilisé (q) prenne cette valeur maximale.

12. Procédé selon l'une des revendications 10 ou 11, caractérisé en ce que la valeur minimale, respectivement maximale, du quantificateur est fixée en début d'image, en fonction du nombre cible de bits à utiliser pour le codage de l'image courante (Bprod), par rapport au nombre moyen de bits utilisés pour le codage d'une image.

13. Procédé selon l'une des revendications 10 à 11, caractérisé en ce que, l'image étant divisée en macroblocs, les valeurs minimale et/ou maximale (qmin, qmax) sont ajustées après chaque calcul du coefficient de correction (c2) en tenant compte de l'évolution de ce coefficient sur au moins la ligne précédente de macroblocs.

14. Procédé selon l'une des revendications précédentes, caractérisé en ce que, l'image étant divisée en macroblocs, un nouveau calcul du coefficient de correction (c2) est effectué pour chacun des macroblocs de la dernière ligne de macroblocs.

**Patentansprüche**

1. Verfahren zur Quantisierung von Koeffizienten in einem System zur Komprimierung von Bildern, dadurch gekennzeichnet, daß jedes Bild in Gruppen von Blöcken aufgeteilt wird,

zu Beginn eines laufenden Bildes ein Quantifikator (qmoy, qmoy1, qmoy2) ermittelt wird, daß der Quantifikator durch einen Koeffizienten (c2) in Abhängigkeit von der Differenz zwischen einerseits der Anzahl der Bit, die für die Gruppen von Blöcken des vorher kodierten laufenden Bildes (Bi_mb) erzeugt werden, und andererseits einer Schätzung der Anzahl der Bit korrigiert wird und die Schätzung von der Aufteilung der Bit unter den Blöcken in wenigstens einem vorher kodierten Bild (bitprev[mb]) abhängig ist.

2. Verfahren nach Anspruch 1, dadurch gekennzeichnet, daß der Koeffizient (c2) vor der Quantisierung wenigstens einer der Gruppen von Blöcken neu berechnet wird.

3. Verfahren nach einem der Ansprüche 1 oder 2, dadurch gekennzeichnet, daß es wenigstens dann eingesetzt wird, wenn das laufende Bild im Inter-Modus kodiert ist.

4. Verfahren nach einem der Ansprüche 1 bis 3, dadurch gekennzeichnet, daß der Quantifikator bei häufigen Koeffizienten angewendet wird, die aus den Pixeln jedes Blocks ermittelt werden.

5. Verfahren nach einem der Ansprüche 1 bis 4, dadurch gekennzeichnet, daß dann, wenn das Bild in Zeilen von Makroblöcken aufgeteilt wird, die Berechnung des Korrekturkoeffizienten (c2) zu Beginn jeder Zeile von Makroblöcken erfolgt.

6. Verfahren nach einem der Ansprüche 1 bis 5, dadurch gekennzeichnet, daß die Schätzung (bitprev [mb]) durch folgende Gleichung erfolgt:

$$bitprev[mb] = a * bitp[mb]_0 + b * bitp[mb]_{i-1}$$

wobei a und b Wichtungskoeffizienten sind, bitp $[mb]_0$ eine Funktion ist, die für das letzte im Intra-Modus kodierte Bild das Verhältnis zwischen der Anzahl der bis zum Makroblock mb benutzten Bilder und der Gesamtzahl der benutzten Bit angibt, wobei bitp$[mb]_{i-1}$ eine ähnliche Funktion für das letzte kodierte Bild darstellt.

7. Verfahren nach dem vorangehenden Anspruch, dadurch gekennzeichnet, daß der Korrekturkoeffizient (c2) derart ist, daß:

$$c2 = c * (Bi\_mb - bitprev[mb]*Bprod_j)/R$$

wobei $Bprod_j$ die Sollzahl der für die Kodierung des Bildes anzuwendenden Bit, R die Datenrate am Ausgang des Puffers und c ein Koeffizient ist.

8. Verfahren nach einem der vorangehenden Ansprüche, dadurch gekennzeichnet, daß dann, wenn Bmoy ein Mittelwert der Anzahl der für die Kodierung eines Bildes benötigten Bit ist, Bprodi die Sollanzahl von für die Kodierung des laufenden Bildes anzuwendenden Bit ist und der zu Beginn des Bildes gewählte Quantifikator (q) folgendes ist:

   - der mittlere Quantifikator (qmoy) des vorangehenden Bildes, wenn $\alpha Bmoy < Bprod < \beta Bmoy$ (mit $\alpha, \beta$ positiv und $\alpha < \beta$),

   wenn der mittlere Quantifikator (qmoy1, qmoy2) des letzten Bildes auf das Kriterium $Bprod \leq \alpha Bmoy$ bzw. $\beta Bmoy \leq Bprod$, wenn für das laufende Bild dieselbe Bedingung mit Bprodi erfüllt ist.

9. Verfahren nach einem der Ansprüche 7 oder 8, dadurch gekennzeichnet, daß die Sollanzahl an Bit, die der Kodierung eines Bildes (Bprod) zugeordnet werden, abhängig ist von dem Füllzustand (Puffer_Status) eines Ausgangspuffers zu Beginn der Kodierung.

10. Verfahren nach einem der vorangehenden Ansprüche, dadurch gekennzeichnet, daß für den Quantifikator (q) ein Minimalwert (qmin) vorgesehen wird, derart, daß die Summe des zu Beginn des Bildes gewählten Quantifikators (qmoy, qmoy1, qmoy2) und des Korrekturkoeffizienten (c2) kleiner als dieser Minimalwert ist und der tatsächlich benutzte Quantifikator (q) diesen Minimalwert annimmt.

11. Verfahren nach einem der vorangehenden Ansprüche, dadurch gekennzeichnet, daß für den Quantifikator (q) ein Maximalwert (qmax) vorgesehen wird, derart, daß die Summe des zu Beginn des Bildes gewählten Quantifikators (qmoy, qmoy1, qmoy2) und des Korrekturkoeffizienten (c2) größer als dieser Maximalwert (qmax) ist und der tatsächlich benutzte Quantifikator (q) diesen Maximalwert annimmt.

12. Verfahren nach einem der Ansprüche 10 oder 11, dadurch gekennzeichnet, daß der Minimalwert bzw. der Maximalwert des Quantifikators zu Beginn des Bildes in Abhängigkeit von der Sollanzahl von für die Kodierung des laufenden Bildes (Bprod) anzuwendenden Bit relativ zu der mittleren Anzahl der für die Kodierung eines Bildes anzuwendenden Bit festgesetzt wird.

13. Verfahren nach einem der Ansprüche 10 bis 11, dadurch gekennzeichnet, daß das Bild in Makroblöcke aufgeteilt wird, daß der Minimalwert und/oder der Maximalwert (qmin, qmax) nach jeder Berechnung des Korrekturkoeffizienten (c2) unter Berücksichtigung des Verlaufs des Koeffizienten auf wenigstens der vorangehenden Zeile der Makroblöcke eingestellt werden.

14. Verfahren nach einem der vorangehenden Ansprüche, dadurch gekennzeichnet, daß dann, wenn das Bild in Makroblöcke aufgeteilt wird, eine neue Berechnung des Korrekturkoeffizienten (c2) für jeden der Makroblöcke der letzten Zeile der Makroblöcke erfolgt.

## Claims

1. Process for quantizing coefficients in an image compression system characterized in that

   each image being divided into groups of blocks, a quantizer (qavg, qavg1, qavg2) is determined at the start of the current image, said quantizer being corrected by a coefficient (c2), dependent on the difference between on the one hand the number of bits produced in respect of the previously coded groups of blocks of the current image (Bi_mb) and on the other hand an estimate of this number of bits, said estimate being dependent on the distribution of the bits among the blocks in at least one previously coded image (bitforc[mb]).

2. Process according to Claim 1, characterized in that said coefficient (c2) is recalculated before the quantizing of at least one of said groups of blocks.

3. Process according to one of Claims 1 or 2, characterized in that it is brought into play at least when the current image is coded in inter mode.

4. Process according to one of Claims 1 to 3, characterized in that said quantizer is applied to frequency coefficients determined on the basis of the pixels of each block.

5. Process according to one of Claims 1 to 4, characterized in that, the image being divided into lines of macroblocks, the calculation of the corrector coefficient (c2) is performed at the start of each line of macroblocks.

6. Process according to one of Claims 1 to 5, characterized in that said estimate (bitforc[mb]) is obtained through the equality:

$$bitforc[mb] = a * bitp[mb]_0 + b * bitp[mb]_{i-1}$$

where a and b are weighting coefficients, $bitp[mb]_0$ is a function giving, for the last image coded in intra mode, the ratio between the number of bits used up to macroblock mb and the total number of bits used, $bitp[mb]_{i-1}$ representing a similar function in respect of the last image coded.

7. Process according to the preceding claim, characterized in that the correction coefficient (c2) is such that:

$$c2 = c * (Bi\_mb - bitforc[mb]*Bprod_i)/R$$

where $Bprod_i$ is the target number of bits to be used for the coding of the current image, R being the bit rate at the output of the buffer, c being a coefficient.

8. Process according to one of the preceding claims, characterized in that Bavg being a mean value of the number of bits required to code an image, Bprodi being the target number of bits to be used for the coding of the current image, the quantizer (q) chosen at the start of an image is:

   - the mean quantizer (qavg) of the previous image if
     $\alpha Bavg < Bprodi < \beta Bavg$ (with $\alpha, \beta$ positive and $\alpha < \beta$)

   the mean quantizer (qavg1, qavg2) of the last image meeting the criterion $Bprod \leq \alpha Bavg$, respectively $\beta Bavg < Bprod$ if, for the current image, the same condition is fulfilled with Bprodi.

9. Process according to one of Claims 7 or 8, characterized in that the target number of bits allocated for the coding of an image (Bprod) is dependent on the state of fill (buffer_status) of an output buffer at the start of the coding.

10. Process according to one of the preceding claims, characterized in that a minimum value (qmin) is provided in respect of the quantizer (q), so that if the sum of the quantizer chosen at the start of an image (qavg, qavg1, qavg2) and of the correction coefficient (c2) is less than this minimum value, the quantizer actually used (q) takes this minimum value.

11. Process according to one of the preceding claims, characterized in that a maximum value (qmax) is provided in respect of the quantizer (q), so that if the sum of the quantizer chosen at the start of an image (qavg, qavg1, qavg2) and of the corrector coefficient (c2) is greater than this maximum value (qmax), the quantizer actually used (q) takes this maximum value.

12. Process according to one of Claims 10 or 11, characterized in that the minimum value, respectively maximum value, of the quantizer is fixed at the start of an image, as a function of the target number of bits to be used for the coding of the current image (Bprod), with respect to the mean number of bits used for the coding of an image.

13. Process according to one of Claims 10 to 11, characterized in that, the image being divided into macroblocks, the minimum and/or maximum values (qmin, qmax) are adjusted after each calculation of the correction coefficient (c2) by taking into account the evolution of this coefficient over at least the previous line of macroblocks.

14. Process according to one of the preceding claims, characterized in that, the image being divided into macroblocks, a new calculation of the correction coefficient (c2) is performed for each of the macroblocks of the last line of macroblocks.

FIG.1

# FIG.2

# FIG.3

FIG.4